# EUROPEAN PATENT APPLICATION

(11) **EP 2 363 676 A1**
(43) Date of publication of application: **07.09.2011**
(21) Application number: 10155345.1
(22) Date of filing: 03.03.2010
(51) Int. Cl.: F28D 7/16, F28D 9/00, F28F 3/08, F28F 9/22, F28F 19/01

(54) **A heat exchanger**

(71) Applicant: Ayma AB, 136 45 Handen (SE)
(72) Inventor: Marttila, Markku, 124 73, BANDHAGEN (SE)
(74) Representative: Karlsson, Leif Karl Gunnar

(57) **Abstract**

A heat exchanger (41) comprising a heat-exchanger housing (VH) that has an upper housing part (42) and a lower housing part (43) wherein the housing completely encloses a heat exchanger pack (VP) having a primary medium inlet (48) and a primary medium outlet (49) and also a secondary medium inlet (46) and a secondary medium outlet (47), wherein the heat exchanger pack (VP) has N number, where preferably N=3, of sections of heat exchange elements (51, 52, 53), wherein each section consists of elongate mutually parallel flat primary medium channels (L) whose ends are each coupled together by means of a transfer channel (54) for connection to adjacent sections or connection to the inlet/outlet (48, 49) for the supply and the exit of primary medium to/from the heat exchanger pack (VP), wherein the upper housing part (42) of the heat-exchanger housing (VH) has over each section of said heat exchange elements (51, 52, 53) a number of waste water channels (50) arranged in sections (S₁, S₂, S₃) where the first end of each channel (50) start at the secondary medium inlet (46) and run along the heat exchange elements to form said sections (S₁, S₂, S₃) in a meander form along in the longitudinal direction of the heat-exchanger housing (VH) and that the waste water channels (50) ends at the secondary medium outlet (47).

## Description

### Technical field

The present invention relates to the field of heat exchangers and more particularly to the design of the heat-exchanger housing such as to achieve effective functioning of the heat exchanger. More specifically, the invention relates to an energy saving heat exchanger for showers, and also to the construction of the heat exchanger.

### Background of the invention

It is extremely important to protect the environment in present day societies when manufacturing new products. Endeavours are made through the medium of varying legislation to encourage people and their use of natural resources to be as considerate as possible to the environment. Industry is also rewarded in different ways, when it adapts its products to something that is friendlier to the environment. In present day recycling societies it is important to take care of and reuse everything that leads to energy savings and energy conservation. The reuse of energy is highly relevant in this context.

For example, when using typical showers a large amount of thermal energy is consumed by mixing incoming cold water with incoming water that has been heated to a selected shower temperature, whereas the waste water from the shower is led directly to the shower drainage system, causing thermal energy to be lost through said system.

The use of a conventional heat exchanger in this shower application results in soiling of the heat exchanger due to the fact that contaminating and solid particles block the heat exchanger and prevent the through flow of secondary water. Moreover, this soiling of the heat exchanger tends to create bacterial growth accompanied by foul smells.

The background to the present invention is disclosed in the patent application PCT/SE2006/050011 and the corresponding patent SE 0500423-9. These patent documents disclose a heat exchanger comprising a heat-exchanger housing that has an upper delimiting surface and a lower delimiting surface. This previously known heat exchanger also discloses a secondary medium inlet and a secondary medium outlet. The housing completely encloses a heat exchanger pack having a primary medium inlet and a primary medium outlet. Furthermore the heat exchanger pack has a number of sections of heat exchange elements wherein each section consists of elongate mutually parallel flat primary medium channels whose ends are each coupled together by means of a transfer channel for connection to adjacent sections or connection to the inlet/outlet for the supply and the exit of primary medium to/from the heat exchanger pack. These documents also disclose that the upper delimiting surface of the heat-exchanger housing has over each section of said heat exchange elements an arched shape whose highest level is located centrally over respective sections. And also in that the secondary medium inlet is situated at the highest level of the arched upper delimiting surface of the first section as well as that the secondary medium outlet is located at the highest level of the arched upper delimiting surface of the last section.

This previously known heat exchanger has a good function but still there exist problems with clogging of particles in the exchanger in the discharge water sections as secondary medium flow.

### Object of the invention

The object of the present invention is to further improve the functionality of a heat exchanger constructed in accordance with the present invention and to retain the energy which would otherwise be considered as wastage as a result of the heat exchange, for instance when taking a shower. Another aim is to enable the temperature of the secondary medium to be reduced so as to minimize the growth of bacteria.

Still another object of the invention is to provide a heat exchanger whose construction contributes towards keeping the interior of the heat exchanger clean from dirt particles.

A further object of the invention is to provide a heat exchanger which can be cleaned easily.

A still further other object of the invention is to provide a heat exchanger having a waste medium outlet arranged to increase the efficiency of the heat exchanger.

Also an object of the invention is to provide a heat exchanger having a waste medium outlet arranged to handle waste particles more efficiently.

### Summary of the invention

These objects are fulfilled by the invention set forth in the accompanying independent claim. Beneficial embodiments of the invention are set forth in the dependent claims.

The invention relates to a heat exchanger, for instance a heat exchanger in which the media used is water and which can therefore be placed beneath a shower tub or shower basin. In this use of the device, the heat exchanger will utilize the energy in the shower drainage water/waste water to heat cold water delivered to the shower.

The heat exchanger comprises a box-like housing which includes a heat-exchanging pack comprised of a number of heating element sections which, in turn, comprise a number of flat or lamella-like channels for transporting primary medium, e.g. cold water, to the mixer fitting of the shower. The purpose of the channels is to take-up heat from the secondary medium that is led around the primary channels. In order to maximize the use of the thermal energy of the secondary medium, for instance the thermal energy of the drainage water, the secondary medium is led in a meandering path through several heat-exchanger sections, where the secondary medium flows around several parallel flat primary medium conducting channels in each of said sections. In the illustrated embodiments the heat exchanging pack consists of three sections of heating elements. In other conceivable embodiments, the number of sections N may be 1 ≤ N ≤ 10 or more.

A heat exchanger according to the invention comprising a heat-exchanger housing that has an upper housing part and a lower housing part. The housing completely encloses a heat exchanger pack having a primary medium inlet and a primary medium outlet and also a secondary medium inlet and a secondary medium outlet. The heat exchanger pack has N number, where preferably N=3, of sections of heat exchange elements. Each section of elements consists of elongate mutually parallel flat primary medium channels whose ends are each coupled together by means of a transfer channel for connection to adjacent sections or connection to the inlet/outlet for the supply and the exit of primary medium to/from the heat exchanger pack. The upper housing part of the heat-exchanger housing has over each section of said heat exchange elements a number of waste water channels arranged in sections where the first end of each channel start at the secondary medium inlet and run along the heat exchange elements to form said sections in a meander form along in the longitudinal direction of the heat-exchanger housing and that the waste water channels ends at the secondary medium outlet.

In another embodiment of the invention the waste water channels located over the first section are located at the lowest vertical level over a bottom surface of the heat exchanger. The waste water channels located over the last section are in this embodiment located at the highest vertical level over said bottom surface of the heat exchanger. This embodiment transports waste particles somewhat better from the inlet side to the outlet side for the waste water.

In another embodiment of the invention the level above said bottom surface of each waste water channels increases continuously along the waste water channel from the secondary medium inlet to the secondary medium outlet. This embodiment further increases the waste particle transport through the heat exchanger housing.

In another embodiment of the invention the primary medium inlet and the primary medium outlet are mounted in the heat exchanger housing along a pivot axis around which pivot axis the heat exchanger pack can be rotated for cleaning purposes. Thus a possibility to angle the heat exchanger pack in an upright position after the top part of the housing has been removed without demounting the exchanger makes it easy to clean the exchanger pack on both sides.

In another embodiment of the invention the secondary medium outlet is provided with a second medium barrier with an upper edge. This embodiment makes it possible to regulate the medium level in the exchanger housing.

In another embodiment of the invention the heat-exchanger housing is divided into N-numbers of spaces which are each delimited from one another by intermediate walls which are connected to the inner surfaces of the heat-exchanger housing along three of its side edges such as to form meandering secondary medium channels through the heat exchanger. Thus a section of the heat exchanger pack is situated in each space. These intermediate walls define the flow path of the secondary medium in the exchanger.

In another embodiment of the invention the secondary medium inlet is connected to an inlet means provided with a heavy-particle trap.

In another embodiment of the invention the secondary medium outlet side of the heat exchanger is provided with an additional water outlet located near the bottom of the heat exchanger housing, preferably vertically beside the secondary medium outlet. This additional water outlet also provides for a complementary medium level regulating means.

In another embodiment of the invention the primary medium and the secondary medium both consist of water.

In another embodiment of the invention the secondary medium is comprised of waste water from a shower and the primary medium is comprised of cold water delivered to the shower. Thus the heat exchanger warms up water to a shower by the waste water from the same shower.

The heat exchanger has an efficiency of up to 65% with minimum internal soiling of the heat-exchanger housing. Tests carried out have shown that soiling is the greatest problem regarding effective functioning of the heat exchanger since it was noted that such contamination also resulted in impairment due to sludge formations. In order to alleviate these soiling and sludging problems, the inlet and outlet in the heat-exchanger housing are placed at the highest possible point in a heat-exchanger section. The particles of dirt floating on the surface of the liquid are flushed out automatically, therewith keeping the housing clean.

When, for instance, showering is terminated, the dirt particles, which are lighter than water and which are present in the residual drainage water in the heat exchanger, rise up to the surface in respective inlet and outlet means and are flushed away when showering is next commenced.

There are two different flows of water into and out of the housing. Secondary medium, or waste water, which is warm and contains thermal energy to be recovered, and then primary medium, or cold water, to be heated by passing through the heat exchanger and then being conducted to the shower under the counter-flow principle. The secondary medium is led through channels built in the heat-exchanger housing thereby enabling the emission of sufficient thermal energy by heat-transfer contact with the primary medium channels before it leaves the housing. Primary medium channels, which each consist of two metal sheets mutually joined to form rectangular sheet metal channels, lead cold water through the heat-exchanger housing. Cold water has time to absorb thermal energy from the waste or drainage water present around the primary medium channels/cold water channels during this through flow process.

Each cold water channel includes two outwardly curved stainless thin metal plates/metal plates which are joined together such as to form a water channel therebetween. Cold water that passes through the cold water channels in the heat-exchanger housing, these channels being filled with waste water heated to about 35°C has time to be heated when the metal plates have a temperature higher than the cold water. This heat exchanging process is able to save up to 65% warm or hot water in the shower.

Application of the present invention has given two resets. Firstly, a major part of the thermal energy of waste water, or drainage water, is recovered from a showering process. This implies that the thermal energy of the waste water taken from a shower tub or basin is used to heat cold water that is intended to pass to the shower nozzle. Secondly, when applying the present invention the temperature of the waste water is beneficially reduced significantly, therewith reducing the possibility of the growth of highly active bacteria in the waste pipes, such growth being able to result in, inter alia, local stoppages and also stoppages in community waste pipes.

### Brief description of the accompanying drawings

The invention will now be described in more detail with reference to exemplifying embodiments and also with reference to the accompanying drawings, in which
Figure 1 is a top view of a heat exchanger according to the prior art;
Figure 2 is a sectional view taken on line A ― A in the prior art heat exchanger shown in Figure 2;
Figure 3 is a perspective view of a heat exchanger according to the present invention;
Figure 4 is a sectional view of the heat exchanger shown in Figure 3;
Figure 5a is a schematic view of a first embodiment of a housing top according to the invention:
Figure 5b is a schematic view of a second embodiment of a housing top according to the invention also disclosed in Figure 4;
Figure 5c is a schematic view of a third embodiment of a housing top according to the invention;
Figure 5d is a schematic view of a fourth embodiment of a housing top according to the invention;
Figure 6a is a top right corner view of a heat exchanger pack according to the present invention;
Figure 6b is a bottom left corner view of a heat exchanger pack according to the present invention;
Figure 7 is a schematic view of a heat exchanger according to the present invention;
Figure 8 is a schematic front view of an embodiment of the waste medium outlet of a heat exchanger according to the present invention;
Figure 9 is a schematic sectional view of the waste medium outlet taken along line B ― B in Figure 8.

### Description of the invention

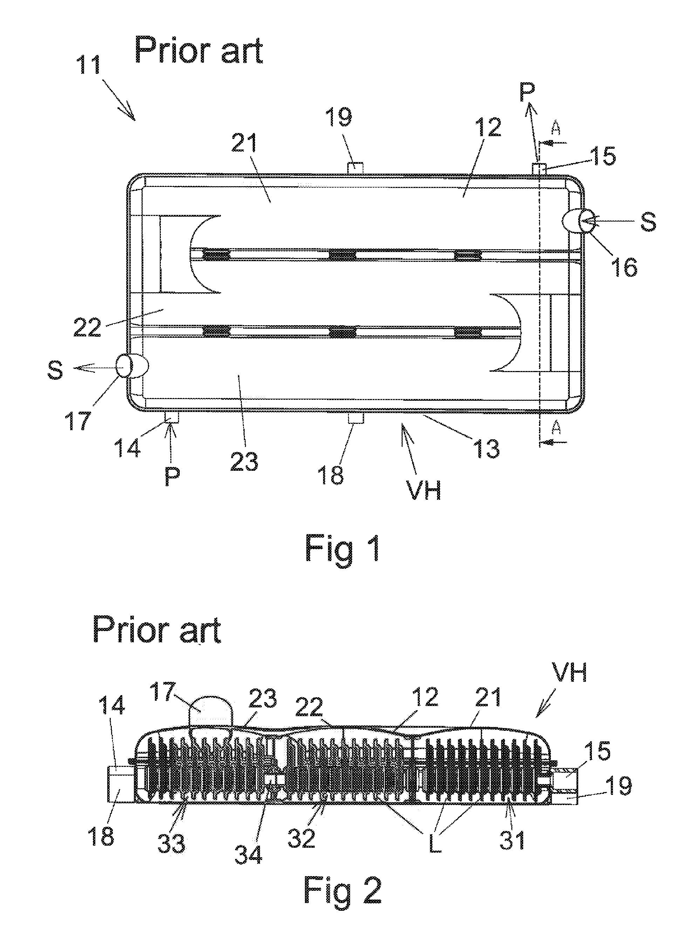

First a prior art heat exchanger will be described in which Figure 1 illustrates a heat exchanger 11 that includes an upper delimiting surface 12 and a lower delimiting surface 13, wherewith these surfaces are joined together such as to form a heat-exchanger housing VH. The housing is provided with a primary medium inlet 14 and a primary medium outlet 15. The housing is provided with a secondary medium inlet 16 and a secondary medium outlet 17. The prior art heat exchanger thus functions according to the counter flow principle. The direction of primary medium flow is marked P while the direction of secondary medium flow is marked S. The heat exchanger also includes a first drainage system 18 and a second drainage system 19, both of which are intended for emptying the heat exchanger. Figure 1 also discloses the heat exchanger from above. As will be seen from the figure the upper delimiting surface 12 is divided into three parallel surface sections 21, 22, 23, each of which is elongated in a direction that coincides with the flow direction of the secondary medium within the heat exchanger. Each secondary medium inlet and outlet of the heat-exchanger housing is disposed at the highest level of the upper delimiting surface 12 of the housing so that any particles that float in the secondary medium will reach the outlet and therewith be carried away when the shower is in use. The primary medium inlet 14 and the primary medium outlet 15 are connected to the cold water pipe leading to the mixing unit of a shower. And the secondary medium inlet 16 and the secondary medium outlet 17 are connected to a waste water pipe for transporting waste water away from the shower.

Figure 2 disclose an enlarged sectional view of the prior art heat exchanger according to Figure 1 taken on the line A ― A in Figure 1, where the secondary medium outlet 17 its shown externally and internally in part with the outlet being placed so that the secondary medium can flow freely to the outlet from the highest level of the heat-exchanger housing VH, i.e. in the absence of any edge from the heat-exchanger housing that could prevent horizontal flow of said medium along the inside of the upper delimiting surface of the housing to the secondary medium outlet 17. Also shown is the primary medium inlet 14, which is partially hidden behind the first drainage system 18. The other side of the heat exchanger includes the second drainage system 19, which is partially hidden by the primary medium outlet 15. The figure clearly illustrates the heat exchanging elements 31, 32, 33 of the heat exchanger pack each element comprised of a number of lamellae L, and a medium connecting device 34 located between the second and the third heat exchanging elements 32, 33. As before mentioned, the upper delimiting surface 12 of the heat-exchanger housing VH is divided into three mutually parallel surface sections 21, 22, 23, where each surface section has an upwardly/outwardly arc shape so that the highest level of the delimiting surface 12 will be situated above each section of a heat exchanging element.

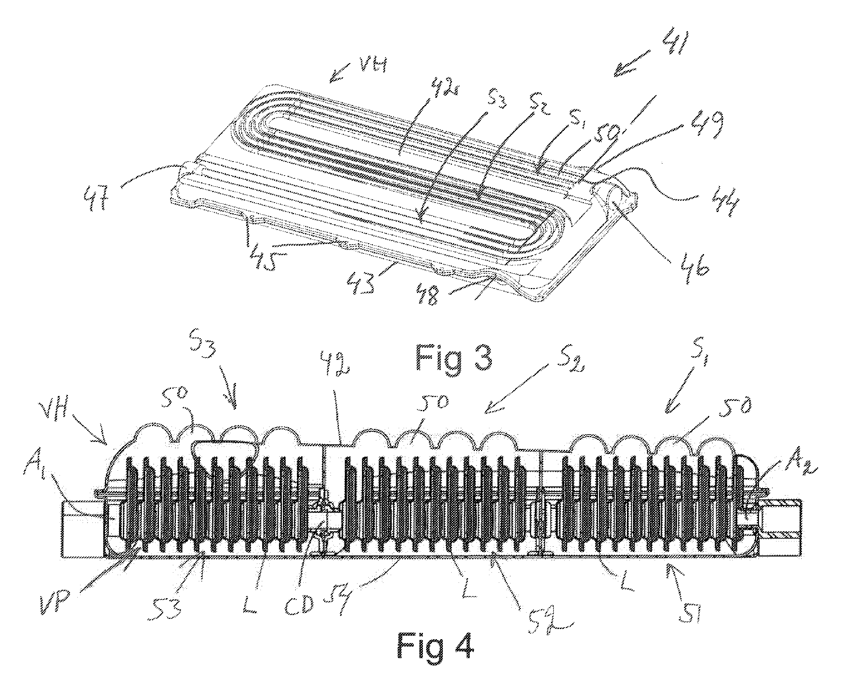

Figure 3 disclose a heat exchanger 41 comprising a housing VH, according to the present invention which heat exchanger is located and used as previously described for the prior art heat exchanger. This new heat exchanger is provided with a new housing design in which a housing top 42 is connected to a housing bottom 43 and which housing top and housing bottom is connected to each other by connections means 45 for pressing the housing top and the housing bottom together. For cleaning purposes a pivotal connection between the housing VH and the heat exchanger pack inside the housing is arranged along a pivot axis 44. There is also a sealing between the housing top and the housing bottom in order to get a water tight housing VH. A secondary medium inlet 46 also called a waste water inlet and a secondary medium outlet 47 also called a waste water outlet are connected to waste water pipes for transporting waste water through the heat exchanger and away from the shower. This waste water warms up the cold water, which comes from the cold water pipe leading to the mixing unit of a shower. This cold water enters the heat exchanger from a primary medium inlet 48 and flows through the heat exchanging elements and out through the primary medium outlet 49 on its way to the mixing unit of the shower. The primary medium inlet 48 and the primary medium outlet 49 of the heat exchanger are attached to conventionally arranged screw fittings of flexible cold water pipes. Inside the housing VH the heat exchanger pack is attached to the primary medium inlet 48 and the primary medium outlet 49 along the pivot axis 44 also by screw fittings so that, when the heat exchanger housing is opened the whole heat exchanger pack can be rotated around the pivot axis 44 to an upright position for cleaning purposes.

The housing top 42 is provided with three sections S₁, S₂, S₃ of waste water channels 50. Each section of water channels is located over one heat exchanger element respectively. Each channel 50 is designed with a semi-circular surface which defines the upper limit of the housing top 42 in the section areas. Furthermore, each channel is designed as a meandering channel which goes from the secondary medium inlet 46 at a first short side of the housing top to the second short side of the housing top where it bends 180 degrees and goes back to the first short side where it again bends 180 degrees and goes back to the second short side at the secondary medium outlet 47.

Figure 4 disclose a section of an embodiment of the invention in which heat exchanging elements 51, 52, 53 are contained in the heat exchanger housing VH. The housing top 42 is provided with the said three sections S₁, S₂, S₃ of waste water channels 50. The first section S₁ represents the inlet side of the housing top 42 and the third section S₃ represents the outlet side of the housing top 42. The waste water channels 50 are designed as semicircular groves which are arranged in groups of four in each waste water channel section. Off course the number of channels in each section can be varied within the scope of protection. For instance the channels can be from two up to six depending on the size of the exchanger. Figure 4 disclose that the waste water channels 50 in the disclosed cross section has the same cross-sectional shape and that the channels 50 are located on a sloping housing top 42. The channels 50 in the first section S₁ of the housing top 42 are located at a shorter vertical distance from the bottom 54 of the heat exchanger housing VH than the channels in the second section S₂ of the housing top 42. Furthermore the channels 50 in the second section S₂ of the housing top 42 are located at a shorter vertical distance from the bottom 54 of the heat exchanger housing VH than the channels 50 in the third section S₃ of the housing top 42. As also can be seen in the figure each of the waste water channels 50 continuously increases its vertical distance from the bottom 54 of the heat exchanger housing VH from the secondary medium inlet 46 to the secondary medium outlet 47 along its meandering path. The angle of the sloping housing top 42 compared to the bottom 54 can be from 5° to 15°.

Figure 4 also illustrates a heat exchanging pack VP comprised of the three heat exchanging elements 51, 52, 53, of which the third heat exchanging element 53 is provided with a first connection A₁ to the primary medium inlet and of which the first heat exchanging element 51 is provided with a second connection A₂ to the primary medium outlet. Each heat exchanging element 51, 52, 53 is comprised of eleven parallel lamellae L in which primary medium is intended to flow. All lamellae L in a heat exchanging element is connected flow-wise to each other and to a common input I one end and to a common output in the other end. Each of the three heat exchanging elements is connected at one end to an adjacent element, such that the output of the third heat exchanging element 53 will be connected to the inlet of the second heat exchanging element 52, and such that the output of the second heat exchanging element 52 will be connected to the inlet of the first heat exchanging element 51, and such that the primary medium will meander through the three heat exchanging elements of the heat exchanger pack VP. The figure clearly illustrates the heat exchanging elements 51, 52, 53 comprised of said lamellae L, and a medium connecting device CD located between the second and the third heat exchanging elements 52, 53. The number of lamellae in each section of a heat exchanging element is K, where 5 ≤ K ≤ 15. In the illustrated embodiments K = 11.

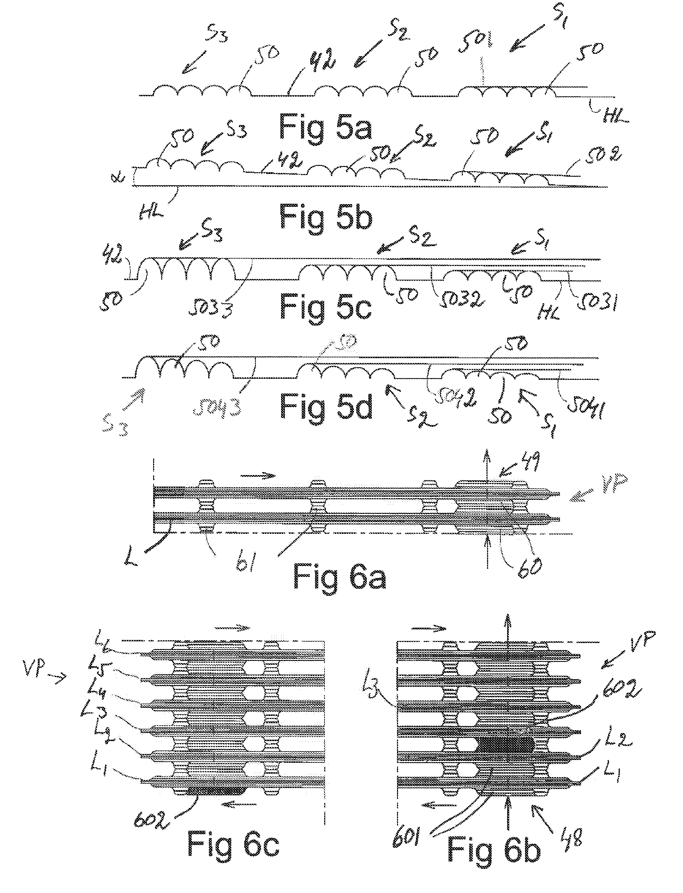

Figure 5a illustrates a first embodiment of a housing top of a heat exchanger pack provided with three housing top sections S₁, S₂, S₃ of waste water channels 50. Each section is located over one heat exchanging element so as to define the housing top over each heat exchanger element. In the disclosed first embodiment each channel 50 has a semi circular shape. The highest level of each channel is the same in each section and also the level of a section is the same as the other sections. The said level is illustrated in the figure by the level line 501 in comparison to the horizontal line HL which in this embodiment coinside with the lowest level of the housing top 42.

Figure 5b illustrates a second embodiment corresponding to figure 4 of a housing top of a heat exchanger pack provided with three housing top sections S₁, S₂, S₃ of waste water channels 50. Each section is located over one heat exchanging element so as to define the housing top over each heat exchanger element. In the disclosed second embodiment each channel 50 has a semi circular shape. Each channel in all sections has the same shape but the lowest level of the housing top 42 is angled towards the horizontal line HL at the angle of α, where 5°<= α <=15°. Thus the highest level of each channel varies and lies on the level line 502 having the angle α towards the horizontal line HL.

Figure 5c illustrates a third embodiment of a housing top of a heat exchanger pack provided with three housing top sections S₁, S₂, S₃ of waste water channels 50. Each section is located over one heat exchanging element so as to define the housing top over each heat exchanger element. In the disclosed third embodiment each channel 50 in the first section S₁ has a semi circular shape. In the second and the third sections S₂, S₃ the channels 50 has a vertical extended semi-circular shape which is provided to a larger extent in the third section S₃. The highest level of each channel in the first section S₁ is the same and is defined by the level line 5031. The highest level of each channel in the second section S₂ is the same and is defined by the level line 5032. The highest level of each channel in the third section S₃ is the same and is defined by the level line 5033. The said levels are illustrated in the figure by the level lines 5031, 5032, 5033 in comparison to the horizontal line HL which in this embodiment coincides with the lowest level of the housing top 42.

Figure 5d illustrates a fourth embodiment of a housing top of a heat exchanger pack provided with three housing top sections S₁, S₂, S₃ of waste water channels 50. Each section is located over one heat exchanging element so as to define the housing top over each heat exchanger element. In the disclosed fourth embodiment each channel 50 in the first section S₁ has an arc shape designed so that the highest level for each respective channel in the same section increases for the nearby located channel. In the second and the third sections S₂ S₃, the channels 50 has a vertical extended semi-circular shape compared to the shape of the channels disclosed in the first section. The extended shapes of the channels are provided to a larger extent in the third section S₃ than for the channels in the second section. The highest level of a channel in the first section S₁ is defined by the level line 5041 and is represented by the channel located closest to the second section. The highest level of a channel in the second section S₂ is defined by the level line 5042 and is represented by the channel located closest to the third section. The highest level of a channel in the third section S₃ is defined by the level line 5043 and is represented by the channel located closest to the secondary medium outlet side of the heat exchanger. In each section and also for all sections the highest level of each respective channel increases towards the secondary medium outlet side of the heat exchanger.

In these described embodiments the channels 50 are disclosed side by side with no space in between but also embodiments where the channels are located beneath each other at a distance from each other as in figure 4 are other possible embodiments of the invention.

Figure 6a discloses a top view of a top right corner of a heat exchanger pack of the invention. The heat exchanger pack VP contains a number of parallel lamellae L in which primary medium is intended to flow. In each lamellae L cold water flows from one end to the other end wherein the ends of the lamellae are connector to each other by a lamellae connection member 60. This connection member is designed either as a flow transporting member or as a flow blocking member. By this design of the lamellae connection members 60 a heat exchanger pack VP can be designed for a particular water flow through the lamellae of the exchanger pack, for example as a meandering water flow path in three heat exchanging elements as disclosed in figure 3 and 4. Each lamellae is designed with separating members 61 on both sides of the lamellae and at equidistant longitudinally locations so that the separating members 61 on two adjacent lamellae abuts each other. The water flow direction is indicated by the arrows in the figure and leaves the heat exchanger pack VP by the primary medium outlet 49.

Figure 6b discloses a top view of a bottom right corner of a heat exchanger pack VP of the invention. The water flow is indicated by the arrows and the exchanger pack VP is designed for this water flow by putting flow transporting members 601 between the first lamellae L₁ and the second lamellae L₂ as well as at the primary medium inlet 48 and by putting flow blocking members 602 between the second lamellae L₂ and the third lamellae L₃.

Figure 6c discloses a top view of a bottom left corner of a heat exchanger pack VP of the invention. A flow blocking member 602 has been put on the left end of the first lamellae L₁ in order to direct the water flow in the first and second lamellae from the inlet to enter the third L₃, fourth L₄, fifth L₅, and sixth L₆ lamellae and in these lamellae flow in the opposite direction as indicated by the arrows.

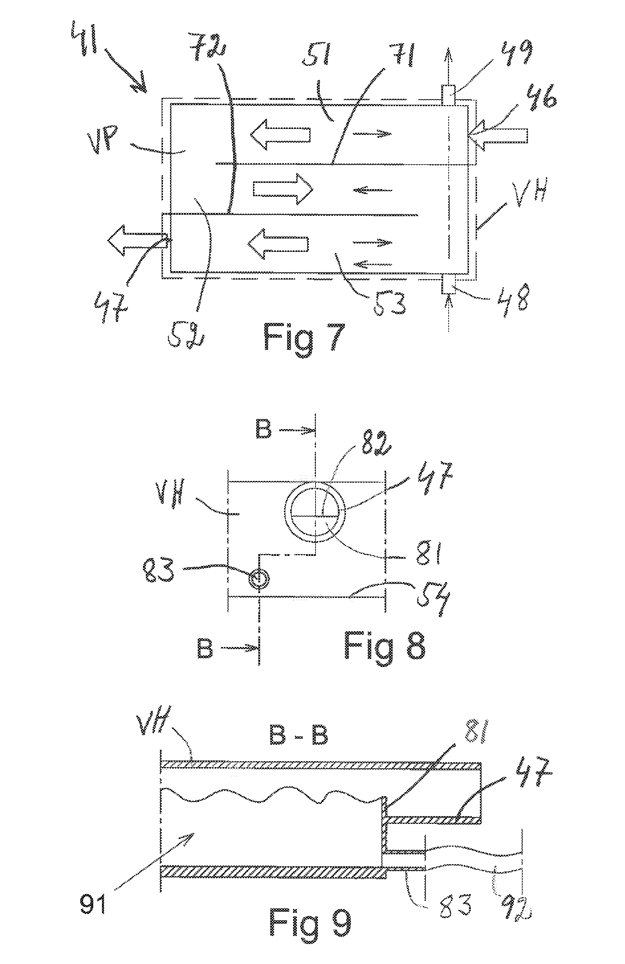

Figure 7 discloses a schematic illustration of a heat exchanger pack design according to the invention in which cold water as primary medium, illustrated by the thin arrows, enters the heat exchanger housing VH through the primary medium inlet 48 and flows through the heat exchanger pack VP to the primary medium outlet 49. The heat exchanger pack VP have been designed as described in figure 6a, 6b and 6c with the lamellae connection members 60, 601, 602 in order to receive the desired water flow, indicated by the thin arrows in the figure, through the heat exchanger pack VP and its elements 51, 52, 53. In order to change the water flow direction in third heat exchanging element 53 a number of lamellae directs the water flow to the left in the figure and the rest of the lamellae are available for the water flow in the opposite direction in this third heat exchanging element 53 as described in figure 6b. Figure 7 discloses also the secondary medium flow, being waste water coming from the shower, indicated by thick arrows. The waste water enters the heat exchanger housing VH through the secondary medium inlet 46 and flows around and between each lamella in an opposite direction through the heat exchanger housing VH to a secondary medium outlet 47. In relation to this secondary medium flow the heat-exchanger housing VH is divided into three spaces which are each delimited from one another by intermediate walls 71, 72 which are connected or abuts to the inner surfaces of the heat-exchanger housing VH along three of its side edges such as to form meandering secondary medium channels through the heat exchanger 41, wherein a section of the heat exchanger pack VP is situated in each space.

Figure 8 discloses the secondary medium outlet 47 for the waste water in the heat exchanger housing VH. The outlet 47 is provided with a medium barrier 81 having an upper horizontal edge 82 which is parallel to the bottom 54. Beside the outlet 47 and located near the bottom 54 of the heat exchanger housing VH an additional water outlet 83 is located. The outlet 47 is connected to a waste water pipe, not disclosed.

Figure 9 discloses the secondary medium outlet 47 in a sectional view where the medium barrier 81 regulates the level of the waste water 91 in the heat exchanger housing VH. To the additional water outlet 83 a flexible water tube 92 is mounted which water tube can be connected to the waste water pipe. As can be seen in the figure the additional water outlet 83 is located at the lowest level of the exchanger housing VH.

The purpose of the water tube is to regulate the water flow through the heat exchanger housing so that the water does not rise to an undesired level which could be so high that the water reaches the shower basin in a shower cabinet. Furthermore the purpose of the water tube is to let the bottom lying colder water out of the exchanger housing since it has lost most of its heat exchanging energy thereby providing for warmer water to reach the lamella which increases the efficiency of the heat exchanger. The combination of the secondary medium outlet 47 and the additional water outlet 83 makes it possible to regulate the water level in the heat exchanger housing so that the water do not reach above the predetermined level.

The purpose of the medium barrier is also to regulate the water level in relation to the lamellae and to regulate the passage of the waste particles in the waste water.

When applied as a shower water heat exchanger, the functioning and the design of the heat exchanger will comprise the use of a box placed beneath the floor of the shower/shower basin, wherein the secondary medium is comprised of the drainage water from the shower/shower basin this water being led through the box to the floor-mounted drain. The cold water channel, which is normally connected to the shower fittings, is connected to the primary medium inlet of the box, wherewith cold water passes through the heat exchanger pack to its primary medium outlet and from there to the cold water connection of the shower fittings. Because the drainage water/waste water herewith flows around the heat exchanger pack and its lamellae in which the cold water flows, the cold water flowing to the shower fittings will be heated in the box by the drainage water, this water having a temperature of about 35°C.

The heat-exchanger housing also has self-cleansing properties, as a result of placing the inlet and the outlet for secondary medium, e.g. the drainage water, at the highest possible point of the box. The heat exchanger is therewith almost completely maintenance-free.

In the shower application of the heat exchanger, attention has been paid to the flow of water through the cold water channels (lamellae) of the heat exchanger, i.e. through the heat exchanger pack. In this regard, the spacing between respective lamellae has been adapted according to the rate at which the water flows through the heat exchanger, in order to prevent adhesion of dirt particles. The free passage between upper and lower lamellae permits the particles to readily pass between the secondary medium inlet and the secondary medium outlet without fastening to the surfaces of the heat-exchanger housing or of the lamellae as they pass through the heat exchanger and out through the conventional drain.

All liquid transporting channels and all other parts of the heat exchanger are comprised of a non-corrosive material so as to maintain a smooth surface for the flow of liquid. The outwardly curved convex shape of the upper delimiting surface along the secondary medium channel facilitates the travel of the dirt particles through the heat exchanger.

By choosing a thinner material for the manufacture of the lamellae than the thickness chosen with respect to the heat-exchanger housing there is gained additional space that enables more effective heat transfer to be achieved from the heat exchanger in comparison with the small space that is taken up. Because the lamellae are comprised of thin material, there is obtained additional space which allows more lamellae to be provided in one and the same section and thus in one and the same heat exchanger pack. This has resulted in higher efficiency with retained primary medium flow. This property has also resulted in an enhanced energy transfer.

The secondary medium inlet and outlet of the heat exchanger seated on the upper delimiting surface can be pivotal. This facilitates fitting of the heat exchanger in small spaces, for instance beneath the tub or basin of a shower. The heat exchanger can be provided with a liquid trap or seal, The liquid in the heat exchanger has been able to obtain a temperature corresponding to the ambient temperature, for instance a temperature of about 20°C in the case of a shower application, it is possible to achieve a heat exchange within the heat exchanger from the very outset of the flow of liquid through the exchanger.

For example, with the application of water as a medium in the case of a shower application, the drainage water inlet and outlet are placed at the highest point on the box. The inlet and outlet are so positioned that dirt and contaminating particles, such as soap, skin residues, etc. in the drainage water will rise to the surface of the water during a showering process and accompany the drainage water out from the box and through the outlet. If the outlet had been placed further down on the box, the contaminants would have remained in the box and have minimum possibility of accompanying the drainage water from the box and would be liable to form blockaging sludge or require dismantling and cleansing of the box at regular intervals. When the box is given, instead, a design with which the drainage water is led out through the lid (the highest point on the box) the box will be cleansed automatically. The dirt particles or contaminants will rise up in the water that remains at the end of a showering session and stay at the highest point of the water, i.e. at the inlet and outlet.

The relatively small water volume of the box, about 7 litres, affords, among other things, the advantages whereby the last rinsing used to rinse soap etc. from the body has time to be flushed out of the box before showering is fully completed. The waste water that remains in the box upon conclusion of a showering process will therewith be relatively clean water. The maximum effect of the box will be achieved relatively quickly, due to the small amount of warm water required for a heat exchange in the box.

A contributory reason for the cleansing effect of the heat exchanger is the broad convex shape of the inner surface of the upper delimiting surface that follows the flow of secondary medium from inlet to outlet. All contaminants are collected on the highest point of the underlying surface and passed out from the heat exchanger. The contaminating particles that remain after cessation of the flow of secondary medium are initially passed out at the beginning of the next flow of secondary medium by liquid bubbles that enter through the secondary medium inlet.

In order to obtain energy from the box directly when beginning to shower, the box is filled with waste water that has at least room temperature.

A heavy-particle trap in the form of a T-pipe is connected upstream of the secondary medium inlet, where metal scrap and heavy particles fall down and thereby prevented from entering the heat exchanger.

The entire heat exchanger is made of acid proof steel and can therefore be cleaned with any cleaning agent whatsoever.

## Claims

1. A heat exchanger (41) comprising a heat-exchanger housing (VH) that has an upper housing part (42) and a lower housing part (43) wherein the housing completely encloses a heat exchanger pack (VP) having a primary medium inlet (48) and a primary medium outlet (49) and also a secondary medium inlet (46) and a secondary medium outlet (47), wherein the heat exchanger pack (VP) has N number, where preferably N=3, of sections of heat exchange elements (51, 52, 53), wherein each section consists of elongate mutually parallel flat primary medium channels (L) whose ends are each coupled together by means of a transfer channel (54) for connection to adjacent sections or connection to the inlet/outlet (48, 49) for the supply and the exit of primary medium to/from the heat exchanger pack (VP), **characterised in that** the upper housing part (42) of the heat-exchanger housing (VH) has over each section of said heat exchange elements (51, 52, 53) a number of waste water channels (50) arranged in sections (S₁, S₂, S₃) where the first end of each channel (50) start at the secondary medium inlet (46) and run along the heat exchange elements to form said sections (S₁, S₂, S₃) in a meander form along in the longitudinal direction of the heat-exchanger housing (VH) and that the waste water channels (50) ends at the secondary medium outlet (47).

2. A heat exchanger according to claim 1, **characterised in that** the waste water channels (50) located over the first section (S₁), are located at the lowest vertical level over a bottom surface (54) of the heat exchanger and that the waste water channels (50) located over the last section (S₃), are located at the highest vertical level over said bottom surface of the heat exchanger.

3. A heat exchanger according to claim 2, **characterised in that** level above said bottom surface of each waste water channels (50) increases continuously along the waste water channel (50) from the secondary medium inlet (46) to the secondary medium outlet (47).

4. A heat exchanger according to any one of claims 1 ― 3, **characterised in that** the primary medium inlet (48) and the primary medium outlet (49) are mounted in the heat exchanger housing (VH) along a pivot axis (44) around which pivot axis the heat exchanger pack can be rotated for cleaning purposes.

5. A heat exchanger according to any of the claims 1 - 4, **characterised in that** the secondary medium outlet is provided with a second medium barrier (81) with an upper edge (82).

6. A heat exchanger according to any one of claims 1 ― 5, **characterised in that** the heat-exchanger housing (VH) is divided into N-numbers of spaces which are each delimited from one another by intermediate walls (71, 72) which are connected to the inner surfaces of the heat-exchanger housing (VH) along three of its side edges such as to form meandering secondary medium channels through the heat exchanger (41), wherein a section of the heat exchanger pack (VP) is situated in each space.

7. A heat exchanger according to any one of claims 1 ― 6, **characterised in that** the secondary medium inlet (46) is connected to an inlet means provided with a heavy-particle trap.

8. A heat exchanger according to any one of claims 1 - 7, **characterised in that** the secondary medium outlet side of the heat exchanger is provided with an additional water outlet (83) located near the bottom (54) of the heat exchanger housing (VH), preferably vertically beside the secondary medium outlet (47).

9. A heat exchanger according to any one of claims 1 ― 8, **characterised in that** the primary medium and the secondary medium both consist of water.

10. A heat exchanger according to any one of claims 1 ― 9, **characterised in that** the secondary medium is comprised of waste water from a shower; and **in that** the primary medium is comprised of cold water delivered to the shower.

## Amended claims

### Amended claims in accordance with Rule 137(2) EPC.

**1.** A heat exchanger (41) composing a heat-exchanger housing (VH) that has an upper housing part (42) and a lower housing part (43) wherein the housing completely encloses a heat exchanger pack (VP) having a primary medium inlet (48) and a primary medium outlet (49) and also a secondary medium inlet (46) and a secondary medium outlet (47), wherein the heat exchanger pack (VP) has N number, where preferably N=3, of sections of heat exchange elements (51, 52, 53), wherein each section consists of elongate mutually parallel flat primary medium channels (L) whose ends are each coupled together by means of a transfer channel (CD) for connection to adjacent sections or connection to the inlet/outlet (48, 49) for the supply and the exit of primary medium to/from the heat exchanger pack (VP) and that the upper housing part (42) of the heat-exchanger housing (VH) has over each section of said heat exchange elements (51, 52, 53) a number of waste water channels (50) arranged in sections (S₁, S₂, S₃) where the first end of each channel (50) start at the secondary medium inlet (46) and run along the heat exchange elements to form said sections (S₁, S₂, S₃) in a meander form along in the longitudinal direction of the heat-exchanger housing (VH) and that the waste water channels (50) ends at the secondary medium outlet (47), **characterised in that** the waste water channels (50) located over the first section (S₁), are located at the lowest vertical level over a bottom surface (54) of the heat exchanger and that the waste water channels (50) located over the last section (S₃), are located at the highest vertical level over said bottom surface (54) of the heat exchanger and that the level above said bottom surface (54) of each waste water channels (50) increases continuously along the waste water channel (50) from the secondary medium inlet (46) to the secondary medium outlet (47).

**2.** A heat exchanger according to claim 1, **characterised in that** the primary medium inlet (48) and the primary medium outlet (49) are mounted in the heat exchanger housing (VH) along a pivot axis (44) around which pivot axis the heat exchanger pack can be rotated for cleaning purposes.

**3.** A heat exchanger according to any of the claims 1 - 2, **characterised in that** the secondary medium outlet is provided with a second medium barrier (81) with an upper edge (82).

**4.** A heat exchanger according to any one of claims 1 - 3, **characterised in that** the heat-exchanger housing (VH) is divided into N-numbers of spaces which are each delimited from one another by intermediate walls (71, 72) which are connected to the inner surfaces of the heat-exchanger housing (VH) along three of its side edges such as to form meandering secondary medium channels through the heat exchanger (41), wherein a section of the heat exchanger pack (VP) is situated in each space.

**5.** A heat exchanger according to any one of claims 1 - 4, **characterised in that** the secondary medium inlet (46) is connected to an inlet means provided with a heavy-particle trap.

**6.** A heat exchanger according to any one of claims 1-5, **characterised in that** the secondary medium outlet side of the heat exchanger is provided with an additional water outlet (83) located near the bottom surface (54) of the heat exchanger housing (VH), preferably vertically beside the secondary medium outlet (47).

**7.** A heat exchanger according to any one of claims 1 - 6, **characterised in that** the primary medium and the secondary medium both consist of water.

**8.** A heat exchanger according to any one of claims 1-7, **characterised in that** the secondary medium is comprised of waste water from a shower; and **in that** the primary medium is comprised of cold water delivered to the shower,
